# EUROPÄISCHE PATENTSCHRIFT

(11) **EP 4 319 550 B1**
(45) Veröffentlichungstag und Bekanntmachung des Hinweises auf die Patenterteilung: **07.10.2026**
(21) Anmeldenummer: 22718171.6
(22) Anmeldetag: 25.03.2022
(51) Int. Cl.: A01M 7/00

(54) **VERFAHREN ZUM AUSBRINGEN EINER SPRITZFLUESSIGKEIT AUF EINER LANDWIRTSCHAFTLICHEN NUTZFLAECHE**
METHOD FOR APPLYING A SPRAYING LIQUID ONTO AGRICULTURAL LAND
PROCÉDÉ D'APPLICATION D'UN LIQUIDE DE PULVÉRISATION SUR UN TERRAIN AGRICOLE

(30) Priorität: 08.04.2021 DE 102021108730
(43) Veröffentlichungstag der Anmeldung: 14.02.2024
(73) Patentinhaber: Amazonen-Werke H. Dreyer SE & Co. KG, 49205 Hasbergen (DE)
(72) Erfinder: TRENTMANN, Markus, 49134 Wallenhorst (DE); SILTMANN, Alexander, 49088 Osnabrück (DE)
(86) Internationale Anmeldenummer: PCT/EP2022/057866
(87) Internationale Veröffentlichungsnummer: WO 2022/214332

(56) Entgegenhaltungen:
- EP-A1- 1 346 637
- CN-B- 109 725 655
- DE-A1- 102017 114 637
- US-B2- 10 773 271

## Beschreibung

Die Erfindung betrifft ein Verfahren zum Ausbringen einer Spritzflüssigkeit auf einer landwirtschaftlichen Nutzfläche gemäß dem Oberbegriff des Patentanspruches 1 und ein landwirtschaftliches Spritzgerät gemäß dem Oberbegriff des Patentanspruches 12.

Auf dem Gebiet der Landwirtschaft sind eine Vielzahl von Varianten gezogener, angebauter und/oder selbstfahrender Arbeitsmaschinen bekannt. Hierzu zählen unter anderem als landwirtschaftliche Spritzgeräte, insbesondere Feldspritzen, ausgebildete Verteilmaschinen die zur Abgabe einer Spritzflüssigkeit auf einer landwirtschaftlichen Nutzfläche geeignet sind. Die Spritzflüssigkeit ist dabei gattungsgemäß als Unkrautbekämpfungsmittel, Pflanzenschutzmittel und/oder Düngemittel ausgeführt und zur Aufbringung auf der landwirtschaftlichen Nutzfläche und/oder dessen Pflanzenbestands vorgesehen. Die CN 109 725 655 B offenbart ein Verfahren und eine Vorrichtung zum Erzeugen eines Durchflussregelungsmodells für eine Mehrfachdüse.

Aufgrund der verhältnismäßig großen Abmessungen landwirtschaftlicher Nutzflächen, weisen derartige landwirtschaftliche Spritzgeräte für gewöhnlich zumindest ein sich quer zu einer Fahrtrichtung erstreckendes, insbesondere klappbares, Verteilergestänge auf. Entlang des Verteilergestänges sind dabei eine Vielzahl von Spritzdüsen angeordnet mittels denen über zugeordnete Schaltelemente, wie beispielsweise Magnetventile, das Material auf der landwirtschaftlichen Nutzfläche ausgebracht wird. Des Weiteren ist zumindest eine, insbesondere zentrale, Fördereineit den Schaltelementen vorgeordnet die dazu eingerichtet ist, die Spritzflüssigkeit ausgehend von dem zumindest einen Vorratsbehälter mit einstellbarem Durchfluss, insbesondere einstellbarer Durchflussmenge und/oder einstellbarem Durchflussdruck, den Schaltelementen zuzubringen. Ferner wird je nach Bedarf und einer damit einhergehenden einstellbaren und den jeweiligen Schaltelemente zugeordneten Öffnungsdauer die Ausbringung, insbesondere eine aktuelle Ausbringmenge und/oder ein Ausbringdruck, der Spritzflüssigkeit über die jeweiligen Schaltelemente zumindest teilweise freigegeben.

Ein entsprechendes Verfahren und ein entsprechendes Spritzgerät, zum Ausbringen von Spritzflüssigkeit auf einer landwirtschaftlichen Nutzfläche ist in der EP 1 346 637 A1 beschrieben. Diese offenbart zur bedarfsgerechten Ausbringung der Spritzflüssigkeit, nach Art einer Pulsweitenmodulation (PWM) steuer- und/oder regelbare Schaltelemente die einzelnen und/oder einer Mehrzahl von Spritzdüsen zugeordnet sind. Hierbei wird eine einem ersten Schaltelement zugeordnete erste Öffnungsdauer und zumindest eine einem weiteren Schaltelement zugeordnete weitere Öffnungsdauer bestimmt, wobei die Ausbringung der Spritzflüssigkeit über die Spritzdüsen über die jeweilige Öffnungsdauer der Schaltelemente zumindest teilweise beeinflusst wird. Des Weiteren wird dabei zumindest eine den Schaltelementen zugeordnete obere und/oder untere Grenzöffnungsdauer verwendet und mit der ersten und/oder zumindest einen weiteren Öffnungsdauer verglichen.

Problematisch bei derartig ausgeführten Verfahren und/oder Spritzgeräten ist, dass die aufgrund einer Über- bzw. Unterschreitung der Grenzöffnungsdauer ausgelöste Anpassung bzw. Korrektur der Öffnungsdauer des ersten Schaltelementes auch die Ausbringung, insbesondere die aktuelle Ausbringmenge und/oder den Ausbringdruck, des zumindest einen weiteren bzw. anderen Schaltelements beeinflusst. Insbesondere die dabei zwischen den Schaltelementen hervorgerufene und zumindest nahezu unberücksichtigte Wechselwirkung wirkt sich besonders Nachteilig auf die mittels des Spritzgeräts erreichbare Ausbringgenauigkeit und/oder Ausbringqualität aus.

Die der Erfindung zugrunde liegende Aufgabe besteht somit darin, ein Verfahren zum Ausbringen einer Spritzflüssigkeit so zu gestalten, dass die Ausbringung der Spritzflüssigkeit, insbesondere die erreichbare Ausbringgenauigkeit und/oder Ausbringqualität, in besonders einfacher Weise noch weiter verbessert wird. Insbesondere soll dabei eine die Ausbringung beeinflussende Wechselwirkung zwischen mehreren Schaltelementen berücksichtigt und/oder zumindest teilweise kompensiert werden.

Diese Aufgabe wird erfindungsgemäß dadurch gelöst, dass bei einem Überschreiten der oberen Grenzöffnungsdauer und/oder einem Unterschreiten der unteren Grenzöffnungsdauer durch eine der ersten oder weiteren bestimmten Öffnungsdauer, zur zumindest teilweisen Aufrechterhaltung der bedarfsgerechten Ausbringung, die erste und weitere Öffnungsdauer, vorzugsweise durch eine Erhöhung und/oder Verringerung, entsprechend gemeinsam korrigiert werden.

Erfindungsgemäß wird für ein erstes Schaltelement eine erste Öffnungsdauer und für eine Mehrzahl von weiteren bzw. anderen Schaltelementen jeweils eine individuelle weitere Öffnungsdauer bestimmt.

In Folge dieser Maßnahme wird bei einem zumindest temporären Über- bzw. Unterschreiten der Grenzöffnungsdauer durch die zumindest eine erste Öffnungsdauer auch zumindest eine weitere Öffnungsdauer, die die jeweilige Grenzöffnungsdauer dabei jedoch nicht über- bzw. unterschreitet, dennoch angepasst bzw. korrigiert. Umgekehrt wird auch bei einem Über- bzw. Unterschreiten der Grenzöffnungsdauer durch zumindest eine weitere Öffnungsdauer auch die zumindest eine erste Öffnungsdauer, die die jeweilige Grenzöffnungsdauer dabei jedoch nicht über- bzw. unterschreitet, dennoch angepasst bzw. korrigiert. Vorzugsweise werden bei einem Über- bzw. Unterschreiten der Grenzöffnungsdauer durch zumindest eine wenigstens einem Schaltelement zugeordneten Öffnungsdauer die Öffnungsdauer aller Schaltelemente angepasst bzw. korrigiert. Des Weiteren erfolgt die Aufrechterhaltung der bedarfsgerechten Ausbringung bevorzugt derart, dass eine aktuelle Ausbringmenge und/oder ein aktueller Ausbringdruck über das zumindest eine Schaltelement, vorzugsweise über alle Schaltelemente, mit korrigierter Öffnungsdauer zumindest nahezu erhalten bleibt. Mittels einem derartig ausgeführten Verfahren ist die Ausbringung der Spritzflüssigkeit auch in Bereichen der Nutzfläche besonders anspruchsvollem Spritzflüssigkeitsbedarf in besonders einfacher Weise verbessert.

Im Folgenden ist unter dem Begriff "Öffnungsdauer" ein Zeitraum oder eine Zeitspanne innerhalb einer Schaltperiode bzw. eines Schaltzyklus zu verstehen, während der das jeweilige Schaltelement zumindest teilweise geöffnet ist. Mit anderen Worten ist für diesen Zeitraum oder diese Zeitspanne eine Ausbringung zumindest einer Teilmenge der zugebrachten Spritzflüssigkeit über das jeweilige Schaltelemente und damit die zugeordnete Spritzdüse freigegeben. Außerhalb dieses Zeitraums oder dieser Zeitspanne ist die Ausbringung zumindest einer Teilmenge der zugebrachten Spritzflüssigkeit über das jeweilige Schaltelement und die dazu zugeordnete Spritzdüse zumindest teilweise gesperrt.

Weiterhin bezeichnet im Folgenden der Begriff "Grenzöffnungsdauer", sofern nicht anders explizit angegeben, eine maximale bzw. minimale Dauer bzw. Zeitspanne die die erste oder weitere Öffnungsdauer maximal bzw. minimal betragen darf. Ist die jeweilige, insbesondere ermittelte, Öffnungsdauer kleiner als die minimale Grenzöffnungsdauer, wird die Grenzöffnungsdauer von der jeweiligen, insbesondere ermittelten, Öffnungsdauer unterschritten. Ist die jeweilige, insbesondere ermittelten, Öffnungsdauer größer als die maximale Grenzöffnungsdauer, wird die Grenzöffnungsdauer von der jeweiligen, insbesondere ermittelten, Öffnungsdauer überschritten. Vorzugsweise wird für zumindest ein Schaltelement neben einer maximalen Grenzöffnungsdauer auch eine minimale Grenzöffnungsdauer verwendet, wobei besonders bevorzugt ein zulässiger Bereich für die erste und/oder weitere Öffnungsdauer von der maximalen und minimalen Grenzöffnungsdauer aufgespannt wird. Insbesondere werden somit durch die Grenzöffnungsdauer und dem damit einhergehenden zulässigen Bereich, vorzugsweise individuelle für ein jeweiliges Schaltelement spezifische, Bereichsgrenzen für die jeweilige Öffnungsdauer definiert.

Die, vorzugsweise maximale und/oder minimale, Grenzöffnungsdauer wird bevorzugt individuell auf der Basis des jeweiligen Schaltelementes und/oder der zugeordneten, insbesondere verwendeten, Spritzdüse bestimmt. Darüber hinaus wird die, vorzugsweise maximale und/oder minimale, Grenzöffnungsdauer alternativ oder zusätzlich auf der Basis des von der Fördereinheit zugebrachten Durchflusses, insbesondere der vorgegebenen Durchflussmenge und/oder des vorgegebenen Durchflussdrucks, und/oder der aktuellen Fahrgeschwindigkeit des Spritzgeräts bestimmt. Insbesondere kann der Durchfluss als ein Mittelwert der Ausbringung, insbesondere der über die Schaltelemente und/oder Spritzdüsen auszubringenden notwendigen Ausbringmengen, dar.

Die Ermittlung und/oder Bestimmung der, insbesondere ersten und/oder weiteren, Öffnungsdauer und/oder der, insbesondere maximalen und/oder minimalen, Grenzöffnungsdauer wird besonders bevorzugt innerhalb eines jeden Steuerungs- und/oder Regelungszyklus eines dem Spritzgerät zugeordneten Steuer- und/oder Regelsystems erneut ausgeführt. Das Steuer- und/oder Regelsystem umfasst bevorzugt zumindest eine innerhalb des Spritzgeräts und/oder eines dazu zugeordneten Zugfahrzeugs angeordnete Recheneinheit, wobei alternativ oder zusätzlich zumindest eine, insbesondere drahtlos und/oder dezentral, mit dem Steuer- Und/oder Regelsystem verbundene Recheneinheit ebenfalls denkbar ist.

In einer bevorzugten Ausführungsform des erfindungsgemäßen Verfahrens wird eine maximale oder minimale Öffnungsdauer oder eine, vorzugsweise maximale, Differenz zwischen der Grenzöffnungsdauer und der zumindest einen ersten und/oder weiteren Öffnungsdauer ermittelt, wobei die Grenzöffnungsdauer dabei zumindest temporär von der jeweiligen ersten und/oder weiteren Öffnungsdauer über- bzw. unterschritten wird. Vorzugsweise ermittelt hierbei ein dem Spritzgerät zugeordnetes Steuer- und/oder Regelsystem die maximale oder minimale Öffnungsdauer oder die Differenz zwischen der Grenzöffnungsdauer und der dazu zugeordneten ersten oder weiteren Öffnungsdauer, die die jeweilige Grenzöffnungsdauer über- bzw. unterschreitet. Weiterhin wird vorzugsweise die zumindest eine erste und weitere Öffnungsdauer in Abhängigkeit der ermittelten maximalen oder minimalen Öffnungsdauer oder der, vorzugsweise maximalen, Differenz korrigiert. Besonders bevorzugt wird hierbei die Öffnungsdauer sämtlicher Schaltelemente auf der Basis der ermittelten maximalen oder minimalen Öffnungsdauer oder der, insbesondere maximalen, Differenz der über- bzw. unterschreitenden Öffnungsdauer korrigiert.

In einer Weiterbildung des erfindungsgemäßen Verfahrens wird die einem jeweiligen Schaltelement zugeordnete Öffnungsdauer aus einem prozentualen Duty-Cycle und die, insbesondere obere und/oder untere, Grenzöffnungsdauer aus einem prozentualen, insbesondere oberen und/oder unteren, Grenz-Duty-Cycle gebildet. Sowohl der Duty-Cycle als auch der Grenz-Duty-Cycle stellen hierbei ein Tastverhältnis bzw. ein Verhältnis einer Impulsdauer zu einer Periodendauer dar. Mit anderen Worten stellt der Duty-Cycle die Breite eines Impulses bzw. eine Pulsweite innerhalb der Schaltperiode bzw. des Schaltzyklus dar. Je größer hierbei der Duty-Cycle ist, desto größer ist die Öffnungsdauer des Schaltelementes. Besonders bevorzugt wird der prozentuale Duty-Cycle und/oder Grenz-Duty-Cycle individuell für das jeweilige erste und weitere bzw. andere Schaltelement bestimmt, wobei vorzugsweise zur Korrektur der ersten und/oder weiteren Öffnungsdauer der jeweilige den Schaltelementen zugeordnete Duty-Cycle in Abhängigkeit der ermittelten maximalen oder minimalen Öffnungsdauer oder der, insbesondere maximalen, Differenz korrigiert wird. Diese Ausführungsform erlaubt eine, insbesondere an moderne Spritzgeräte angepasste, besonders einfach ausgeführte Regelung der Ausbringung, insbesondere der jeweiligen unterschiedlichen Ausbringmengen und/oder Ausbringdrücke, über die Schaltelemente.

In einer anderen Weiterbildung des erfindungsgemäßen Verfahrens wird die Spritzflüssigkeit auf der Basis einer bestimmten Durchschnittsöffnungsdauer, insbesondere einem Durchschnitts-Duty-Cycle, über die Schaltelemente ausgebracht. Vorzugsweise wird hierbei ein über die Fördereinheit zubringbarer Durchfluss, insbesondere eine Durchflussmenge und/oder ein Durchflussdruck, der Spritzflüssigkeit und eine, insbesondere aktuelle, Fahrgeschwindigkeit des Spritzgeräts entlang der Nutzfläche von dem Steuer- und/oder Regelsystem und/oder einem Bediener abgerufen und/oder vorgegeben, wobei die Durchschnittsöffnungsdauer, insbesondere der Durchschnitts-Duty-Cycle, auf der Basis des abgerufen und/oder vorgegeben Durchflusses und der Fahrgeschwindigkeit ermittelt und/oder bestimmt wird. Bevorzugt wird die Durchschnittsöffnungsdauer, insbesondere der Durchschnitts-Duty-Cycle, derart vom Steuer- und/oder Regelsystem vorgegeben, dass der abgerufene und/oder vorgegebene Durchfluss, insbesondere der Durchflussdruck innerhalb des Spritzgeräts, während der Ausbringung zumindest nahezu erreicht und/oder aufrechterhalten wird. Weiterhin wird hierbei auch die erste und weitere Öffnungsdauer, insbesondere der erste und weitere Duty-Cycle, auf der Basis der Durchschnittsöffnungsdauer, insbesondere dem Durchschnitts-Duty-Cycle, bestimmt. Bei einer Korrektur der ersten oder weiteren Öffnungsdauer, insbesondere des ersten oder des weiteren Duty-Cycle, wird die, insbesondere vom Steuer- und/oder Regelsystem, bestimmte und/oder vorgegebene Durchschnittsöffnungsdauer, insbesondere der Durchschnitts-Duty-Cycle, angepasst. Bei einer derartigen Ausführungsform wird die Ausbringung, insbesondere die Anpassung der ersten und/oder weiteren Öffnungsdauer, besonders ressourcensparend, insbesondere mit geringem Rechenbedarf und/oder Ermittlungsaufwand, erreicht.

Besonders bevorzugt wird bei einer Korrektur der ersten oder weiteren Öffnungsdauer, insbesondere des ersten oder des weiteren Duty-Cycle, die Durchschnittsöffnungsdauer, insbesondere der Durchschnitts-Duty-Cycle, derart angepasst, dass der Durchfluss, insbesondere die Durchflussmenge und/oder der Durchflussdruck, von der Korrektur zumindest nahezu nicht beeinflusst wird.

In einer weiteren bevorzugten Ausführungsform des erfindungsgemäßen Verfahrens wird zumindest ein, vorzugsweise gemeinsamer, Korrekturfaktor für die erste und weitere bestimmte Öffnungsdauer in Abhängigkeit der maximalen oder minimalen Öffnungsdauer oder der, vorzugsweise maximalen, Differenz ermittelt. Zur Korrektur der ersten und weiteren Öffnungsdauer wird der zumindest eine Korrekturfaktor mit der Durchschnittsöffnungsdauer, insbesondere dem Durchschnitts-Duty-Cycle, verrechnet. Diese Ausführungsform erlaubt eine noch weiter vereinfachte Ermittlung der jeweiligen Öffnungsdauern, insbesondere der Duty-Cycle, für die Schaltelemente.

In einer weiteren Weiterbildung des erfindungsgemäßen Verfahrens wird zumindest eine wenigstens einem jeweiligen Schaltelement, insbesondere Spritzdüse, zugeordnete notwendige Ausbringmenge bestimmt, wobei zur Korrektur der ersten und weiteren Öffnungsdauer der zumindest eine Korrekturfaktor mit der jeweiligen notwendigen Ausbringmenge eines Schaltelementes verrechnet wird. Die jeweilige notwendige Ausbringmenge der Schaltelemente basiert hierbei vorzugsweise auf einem teilflächenspezifischen Bedarf an Spritzflüssigkeit der landwirtschaftlichen Nutzfläche und/oder dem Pflanzenbestand. Besonders bevorzugt wird die jeweilige notwendige Ausbringmenge auf der Basis einer abrufbaren und/oder vorgebbaren Applikationskarte bestimmt. Ferner bevorzugt wird der Korrekturfaktor mit der jeweiligen notwendigen Ausbringmenge eines Schaltelementes und mit der, insbesondere vom Steuer- und/oder Regelsystem, bestimmten und/oder vorgegebenen Durchschnittsöffnungsdauer, insbesondere dem Durchschnitts-Duty-Cycle, verrechnet. Bei einer derartigen Ausgestaltung des Verfahrens ist eine auf der einen Seite bedarfsorientierte und auf der anderen Seite einfache Bestimmung der jeweiligen über die Schaltelemente einstellbaren Ausbringmengen und/oder Ausbringdrücke erreicht.

Bei einer besonders bevorzugten Ausführungsform des erfindungsgemäßen Verfahrens sind die Schaltelemente ferner nach Art einer Pulsweitenfrequenzmodulation (PWFM) steuer- und/oder regelbar, wobei hierbei die zumindest eine obere und/oder untere Grenzöffnungsdauer, vorzugsweise variabel, in Abhängigkeit wenigstens einer den jeweiligen Schaltelementen zugeordneten Pulsfrequenz bestimmt wird. Anders als bei der reinen Pulsweitenmodulation (PWM) kann hierbei alternativ oder zusätzlich zu der Öffnungsdauer bzw. der Pulsweite auch die Pulsfrequenz bzw. die Dauer des Schaltzykluses des Schaltelementes verändert werden. Die Grenzöffnungsdauer, insbesondere der Grenz-Duty-Cycle, eines Schaltelementes wird hierbei besonders bevorzugt in Abhängigkeit der jeweiligen dem Schaltelement zugeordneten Pulsfrequenz bestimmt und/oder vorgegeben. Beispielsweise kann hierbei durch eine zumindest temporäre Reduktion der Pulsfrequenz die Grenzöffnungsdauer, insbesondere der minimale Grenz-Duty-Cycle, zumindest eines Schaltelementes reduziert werden. Anders herum kann beispielsweise auch durch eine zumindest temporäre Erhöhung der Pulsfrequenz die Grenzöffnungsdauer, insbesondere der minimale Grenz-Duty-Cycle, zumindest eines Schaltelementes erhöht werden. Mittels einer derartigen Ausführungsform ist ein Einsatzspektrum und/oder eine Einsatzfähigkeit der Stellelemente in besonders hohem Ausmaß gesteigert. Die zumindest eine verwendete Grenzöffnungsdauer, insbesondere der Grenz-Duty-Cycle, ist hierdurch anstelle der aus dem Stand der Technik bisher bekannten zumindest annährend festen Vorgabe nun während der Ausbringung mit besonders hoher Variabilität anpassbar.

In einer besonders bevorzugten Weiterbildung des erfindungsgemäßen Verfahrens wird überprüft ob mit der zumindest einen bestimmten oberen und/oder unteren Grenzöffnungsdauer, insbesondere dem Grenz-Duty-Cycle, eine notwendige Ausbringung, insbesondere eine notwendige Ausbringmenge und/oder ein notwendiger Ausbringdruck, über die jeweiligen Schaltelementen und/oder den dazu zugeordneten Spritzdüsen erreicht wird. Befindet sich die notwendige Ausbringung, insbesondere die notwendige Ausbringmenge und/oder der notwendige Ausbringdruck, außerhalb eines, vorzugsweise vorgebbaren, Akzeptanzbereiches wird die zumindest eine obere und/oder untere Grenzöffnungsdauer, insbesondere der Grenz-Duty-Cycle, durch eine Anpassung der jeweiligen einem Schaltelemente zugeordnete Pulsfrequenz korrigiert.

Die auszubringende Spritzflüssigkeit wird darüber hinaus den jeweiligen Schaltelementen bevorzugt mit einem definierten, vorzugsweise abrufbaren und/oder vorgebbaren, Durchfluss, insbesondere einer Durchflussmenge und/oder einem Durchflussdruck, zugebracht.

Bei einer besonders bevorzugten Ausführungsform des erfindungsgemäßen Verfahrens wird der Durchfluss, insbesondere die Durchflussmenge und/oder der Durchflussdruck innerhalb des Spritzgeräts, durch das Überschreiten der oberen Grenzöffnungsdauer entsprechend erhöht oder durch das Unterschreiten der unteren Grenzöffnungsdauer entsprechend verringert. Der Durchfluss, insbesondere die Durchflussmenge und/oder der Durchflussdruck, wird hierbei bevorzugt bei einer Über- bzw. Unterschreitung der Grenzöffnungsdauer zumindest temporär angepasst, insbesondere dann wenn die mittels der Pulsfrequenz anpassbare Grenzöffnungsdauer von der, vorzugsweise ersten und/oder weiteren, Öffnungsdauer nicht erreicht wird. Bei einer derartigen Ausführungsform ist die zumindest eine, insbesondere obere und/oder untere, Grenzöffnungsdauer wenigstens eines Schaltelements dynamisch und/oder temporär, insbesondere situationsabhängig, während der Ausbringung anpassbar.

Bei einer weiteren besonders bevorzugten Weiterbildung des erfindungsgemäßen Verfahrens wird eine zulässige Fahrgeschwindigkeit, vorzugsweise ein zulässiger Fahrgeschwindigkeitsbereich, für das Spritzgerät während der Ausbringung anhand der zumindest einen, vorzugsweise oberen und/oder unteren, Grenzöffnungsdauer, der, insbesondere ausgewählten, Spritzdüsen und/oder der jeweiligen Ausbringmengen ermittelt. Bevorzugt wird die zulässige Fahrgeschwindigkeit, insbesondere der zulässige Fahrgeschwindigkeitsbereich, automatisiert mittels des Steuer- und/oder Regelsystems ermittelt und/oder abgerufen. Vorzugsweise erhält der Bediener bei einem Über- bzw. Unterschreiten der zulässigen Fahrgeschwindigkeit, vorzugsweise des Fahrgeschwindigkeitsbereiches, eine Visualisierung und/oder Alarmierung.

In einer besonders bevorzugten Ausführungsform wird die zulässige Fahrgeschwindigkeit, vorzugsweise der zulässige Fahrgeschwindigkeitsbereich, durch Verändern der zumindest einen oberen und/oder unteren Grenzöffnungsdauer, insbesondere der Pulsfrequenz, angepasst.

Die der Erfindung zugrunde liegende Aufgabe wird ferner durch ein landwirtschaftliches Spritzgerät mit einem Steuer- und/oder Regelsystem der eingangs genannten Art gelöst, wobei das landwirtschaftliche Spritzgerät, insbesondere mittels des Steuer- und/oder Regelsystems, dazu eingerichtet ist, das Verfahren nach zumindest einer der vorgenannten Ausführungsform auszuführen. Hinsichtlich der Vorteile und Modifikationen des erfindungsgemäßen landwirtschaftlichen Spritzgeräts wird zunächst auf die Vorteile und Modifikationen des erfindungsgemäßen Verfahrens verwiesen.

Weitere Einzelheiten der Erfindung sind der Beispielsbeschreibung und den Zeichnungen zu entnehmen. Die Zeichnungen zeigen
- Fig.1: ein Ausführungsbeispiel eines erfindungsgemäßen landwirtschaftlichen Spritzgeräts in einer schematischen Ansicht von hinten;
- Fig.2a: eine erste Schaltabfolge eines Schaltelements in schematischer Ansicht;
- Fig.2b: die Schaltabfolge aus Fig.2a mit Variation einer Öffnungsdauer;
- Fig.3: eine zweite Schaltabfolge mit Variation einer Pulsfrequenz und einer Grenzöffnungsdauer in schematischer Ansicht;
- Fig.4: ein Ausführungsbeispiel einer Gleichung zur Ermittlung und/oder Berechnung einer Öffnungsdauer des Schaltelements;
- Fig.5a: ein erstes Ausführungsbeispiel einer Regelung von Schaltelementen mit einer erfindungsgemäßen Korrektur in schematischer Ansicht;
- Fig.5b: ein zweites Ausführungsbeispiel einer Regelung von Schaltelementen mit einer erfindungsgemäßen Korrektur in schematischer Ansicht;
- Fig.5c: ein drittes Ausführungsbeispiel einer Regelung von Schaltelementen mit einer erfindungsgemäßen Korrektur in schematischer Ansicht; und
- Fig.5d: ein viertes Ausführungsbeispiel einer Regelung von Schaltelementen mit einer erfindungsgemäßen Korrektur in schematischer Ansicht.

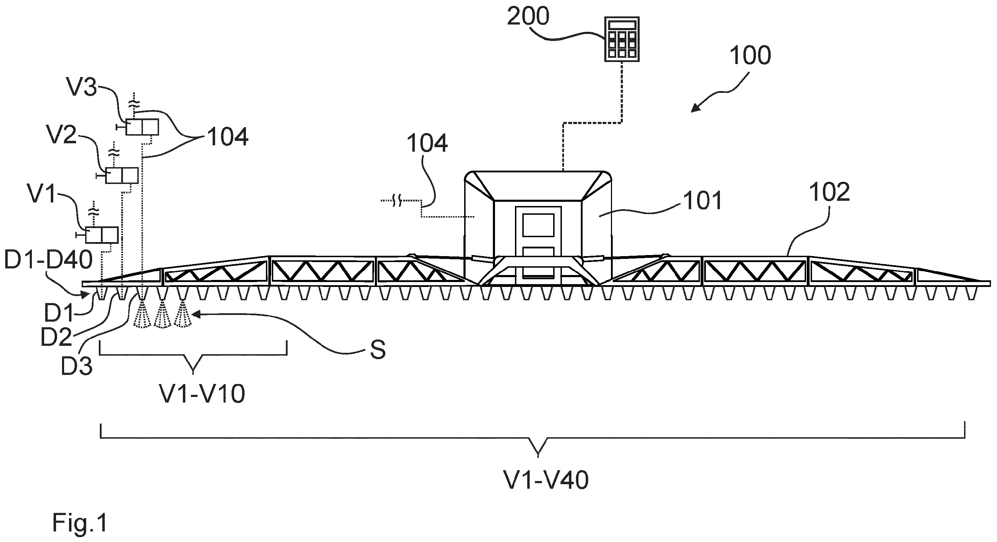

Ein von einer Zugmaschine, insbesondere einem nicht dargestellten Traktor, getragenes landwirtschaftliches Spritzgerät 100 mit einem dazu zugeordneten Steuer- und/oder Regelsystem 200 ist in der Fig.1 gezeigt. Das Spritzgerät 100 kann alternativ zum gezeigten Ausführungsbeispiel auch als gezogenes und/oder selbstfahrendes Spritzgerät, insbesondere als Feldspritze, ausgebildet sein.

Das Spritzgerät 100 ist dazu eingerichtet, Spritzflüssigkeit S, insbesondere in Form von Unkrautbekämpfungsmittel, Pflanzenschutzmittel und/oder Düngemittel, über mehrere an einem ausklappbaren Verteilergestänge 102 angeordnete Spritzdüsen D1-D40 auf einer landwirtschaftlichen Nutzfläche und/oder auf einem Pflanzenbestand auszubringen. Das beispielhaft gezeigte Spritzgerät 100 umfasst neben einem Vorratsbehälter 101, der zum Bevorraten der Spritzflüssigkeit S dient, über ein in den Figuren nicht gezeigtes Fördersystem mit zumindest einer Fördereinheit, insbesondere Förderpumpe, und mehreren fluidleitenden Förderleitungen 104. Das Fördersystem, insbesondere die zumindest eine Fördereinheit, ist dazu eingerichtet, die Spritzflüssigkeit S mit einstellbarem Durchfluss Q, insbesondere Durchflussdruck und/oder einstellbarer Durchflussmenge, über die Fluidleitungen 104 vom Vorratsbehälter 101 zu den entlang des Verteilergestänges 102 angeordneten Spritzdüsen D1-D40 zu fördern. Jeder Spritzdüse D1-D40 ist jeweils zumindest ein nach Art einer Pulsweitenmodulation (PWM) steuer- und/oder regelbares und als Magnetventil ausgebildetes Schaltelement V1-V40 zugeordnet, wobei die Schaltelemente V1-V40 zwischen den jeweiligen Spritzdüsen D1-D40 und dem Vorratsbehälter 101 angeordnet sind. In der Fig.1 sind aus Gründen der Übersichtlichkeit beispielhaft nur die den Spritzdüsen D1-D3 zugeordneten Schaltelemente V1-V3 und die dazu zugeordneten Fluidleitungen 104 schematisch dargestellt. Die jeweiligen Schaltelemente V1-V40 sind dazu eingerichtet, die mittels der Fördereinheit zubringbare Spritzflüssigkeit S bedarfsgerecht an die jeweiligen zugeordneten Spritzdüsen D1-D40 freizugeben. Insbesondere wird die Spritzflüssigkeit S dabei derart von den Schaltelementen V1-V40 freigegeben, dass eine für zumindest eine Teilfläche der Nutzfläche notwendige Ausbringmenge an Spritzflüssigkeit S über die Spritzdüsen D1-D40 auf der Nutzfläche und/oder einem Pflanzenbestand appliziert wird. Alternativ oder zusätzlich zur Ausbringmenge kann hierbei auch ein Ausbringdruck, mit dem die Spritzflüssigkeit S aus den jeweiligen Spritzdüsen D1-D40 austritt, mittels der Schaltelemente V1-V40 variiert werden. Je nach Ausführungsform der Spritzdüsen D1-D40 und/oder dem Durchfluss Q, insbesondere der Durchflussmenge und/oder dem Durchflussdruck, innerhalb des Spritzgeräts 100, ist die Spritzflüssigkeit S in Form eines von den Spritzdüsen D1-D40 ausgehenden Spritzfächers S, insbesondere mit anpassbarem Tropfenspektrum, ausbringbar.

Die Schaltelemente V1-V40 können alternativ oder zusätzlich auch innerhalb und/oder an den jeweiligen Spritzdüsen D1-D40 angeordnet sein. Des Weiteren können die Spritzdüsen D1-D40 hierbei auch alternativ oder zusätzlich teil eines Mehrfachdüsenkörpers mit mehreren zur Ausbringung aktivierbaren Spritzdüsen D1-D40 sein, wobei jedem Mehrfachdüsenkörper und/oder jeweils einer Gruppe von Spritzdüsen D1-D40 zumindest ein Schaltelement V1-V40 zugeordnet sein kann. An dieser Stelle sei explizit darauf hingewiesen, dass die Anzahl der Schaltelemente V1-V40 und/oder Spritzdüsen D1-D40 hier nur beispielhaft auf 40 festgelegt ist. Gattungsgemäße Spritzgeräte 100 können auch weniger oder mehr als 40 Schaltelemente V1-V40 und/oder Spritzdüsen D1-D40 umfassen.

Die Ausbringung, insbesondere der Durchfluss Q, die Ausbringmenge und/oder der Ausbringdruck, über die Spritzdüsen D1-D40 ist über eine den jeweiligen Schaltelementen V1-V40 zugeordnete Öffnungsdauer DCV beeinflussbar. Zur bedarfsgerechten Ausbringung wird von dem Steuer- und/oder Regelsystem 200 zumindest eine einem ersten Schaltelement V1 zugeordnete erste Öffnungsdauer DCV und zumindest eine einem weiteren bzw. anderen Schaltelement V2-V40 zugeordnete weitere Öffnungsdauer DCV bestimmt. Des Weiteren wird vom Steuer- und/oder Regelsystem 200 zumindest eine den jeweiligen Schaltelementen V1-V40 zugeordnete obere und/oder untere Grenzöffnungsdauer GU1-GO2 verwendet, wobei die zumindest eine erste und/oder weitere bestimmte Öffnungsdauer DCV vom Steuer- und/oder Regelsystem 200 mit der jeweiligen oberen und/oder unteren Grenzöffnungsdauer GU1-GO2 verglichen wird. Darüber hinaus ist das Steuer- und/oder Regelsystem 200 dazu eingerichtet, bei einem Überschreiten der oberen Grenzöffnungsdauer GO1, GO2 und/oder einem Unterschreiten der unteren Grenzöffnungsdauer GU1, GU2 durch eine der ersten oder weiteren bestimmten Öffnungsdauer DCV, die erste und weitere Öffnungsdauer DCV, insbesondere durch eine Erhöhung und/oder Verringerung, entsprechend gemeinsam zu korrigieren und somit die bedarfsgerechte, insbesondere teilflächenspezifische, Ausbringung zumindest teilweise aufrechtzuerhalten.

Die einem jeweiligen Schaltelement V1-V40 zugeordnete Öffnungsdauer wird in diesem Ausführungsbeispiel aus einem prozentualen Duty-Cycle DCV gebildet. Analog dazu wird die, insbesondere obere und/oder untere, Grenzöffnungsdauer aus einem, insbesondere oberen und/oder unteren, Grenz-Duty-Cycle GU1-GO2 gebildet.

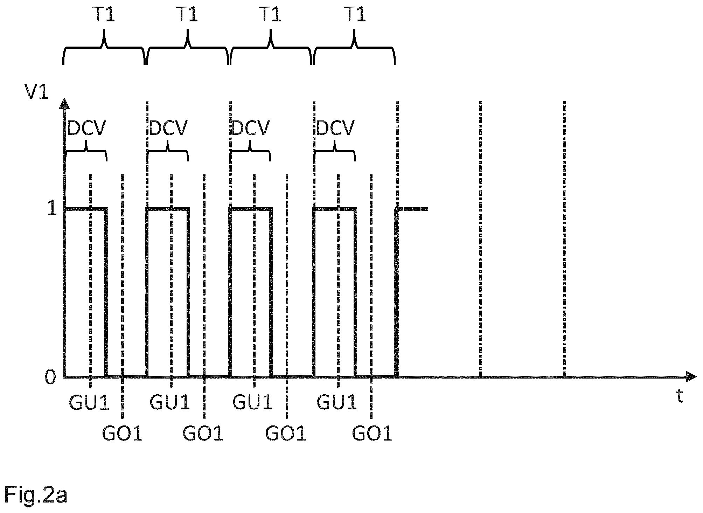

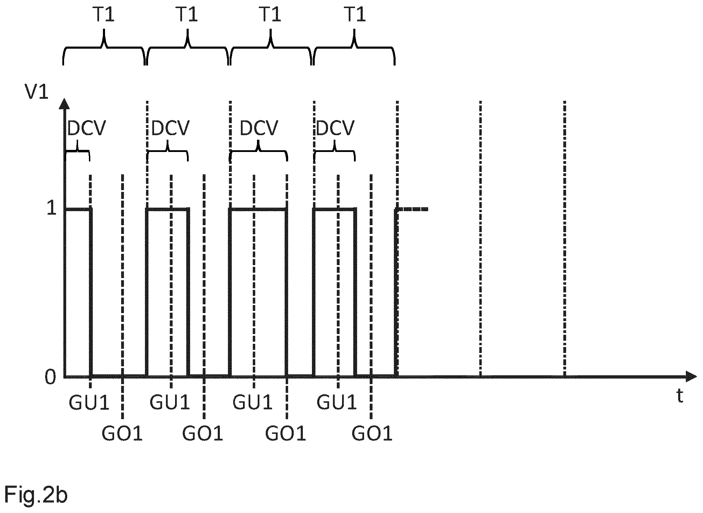

Eine geeignete Ansteuerung der Schaltelemente V1-V40 kann wie in der Fig.2a und Fig.2b beispielhaft gezeigt und folgend näher beschrieben ausgeführt werden. Das zur Beschreibung hier beispielhaft betrachtete Schaltelement V1 kann innerhalb einer ersten Periodendauer T1 zu Sperrung der Ausbringung in der Schaltstellung 0 (geschlossene Ventilstellung) und zur Freigabe der Ausbringung in der Schaltstellung 1 (geöffnete Ventilstellung) verbracht werden. Hierzu wird das Schaltelement V1 mit anpassbarem elektrischem Strom, insbesondere mit modulierter elektrischer Spannung und/oder Stromstärke, angesteuert. Die erste Periodendauer T1 ist in dem in der Fig.2a gezeigten Ausführungsbeispiel konstant und setzt sich aus der Öffnungsdauer bzw. dem Duty-Cycle DCV und der Dauer in der geschlossenen Schaltstellung 0 zusammen. Somit entspricht die Breite der jeweiligen gezeigten Impulse innerhalb einer Periodendauer T1 dem Duty-Cycle DCV des Schaltelements V1, wobei die Breite des Duty-Cycles DCV in diesem Ausführungsbeispiel konstant ist, insbesondere etwa 50% der Periodendauer T1. Der Duty-Cycle DCV des Schaltelementes V1 kann vom Steuer- und/oder Regelsystem 200 innerhalb der jeweiligen Schaltperiode bzw. der Pulsfrequenz zwischen dem unteren Grenz-Duty-Cycle GU1 (hier beispielhaft etwa 30%) und dem oberen Grenz-Duty-Cycle GO1 (hier beispielhaft etwa 70%) variiert werden, um so die Ausbringung zumindest teilweise zu beeinflussen. Mit anderen Worten werden zwischen dem oberen Grenz-Duty-Cycle GO1 und dem unteren Grenz-Duty-Cycle GU1 für den Duty-Cycle DCV des Schaltelementes V1 zulässige Bereichsgrenzen gebildet.

Eine beispielhafte zulässige Variation des Duty-Cycles DCV ist in der Fig.2b zu sehen. Hierbei ist der Duty-Cycles DCV des Schaltelementes V1 in der ersten Schaltperiode bzw. Pulsfrequenz bis zumindest nahezu auf den unteren Grenz-Duty-Cycle GU1 eingestellt. In der dritten Schaltperiode ist der Duty-Cycle DCV zur Veränderung der Ausbringung am Schaltelement V1 auf zumindest nahezu den oberen Grenz-Duty-Cycle GO1 angepasst. Hierbei gilt, umso größer der Duty-Cycle DCV ist, desto mehr Spritzflüssigkeit S wird über das Schaltelement V1-V40 und damit die zugeordnete Spritzdüse D1-D40 ausgebracht.

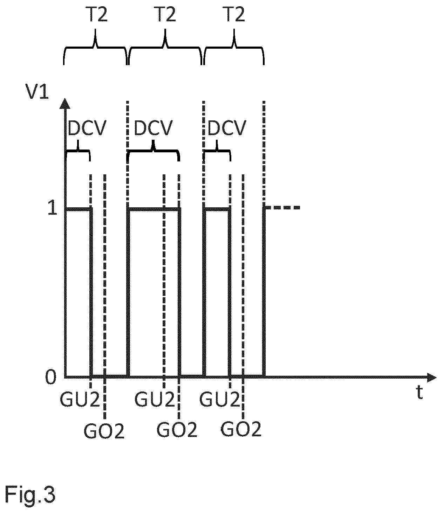

Die Schaltelemente V1-V40 sind alternativ oder zusätzlich, insbesondere vom Steuer- und/oder Regelsystem 200, nach Art einer Pulsweitenfrequenzmodulation steuer- und/oder regelbar. Dadurch ist neben der Schaltperiode T1, T2 auch die, insbesondere obere und/oder untere, Grenzöffnungsdauer GU1-GO2, insbesondere der Grenz-Duty-Cycle, anpassbar, wie in der Fig.3 zu sehen ist. Die gezeigte zweite Periodendauer T2 bzw. Schaltperiode ist gegenüber dem vorherigen Ausführungsbeispiel reduziert. Analog dazu ist auch der, insbesondere obere und/oder untere, Grenz-Duty-Cycle GU2, GO2 angepasst. Die obere und/oder untere Grenzöffnungsdauer bzw. der Grenz-Duty-Cycle GU1-GO2 sind somit, insbesondere variabel, in Abhängigkeit der einstellbaren Pulsfrequenz anpassbar und/oder bestimmbar.

Das anhand der Fig.2a, 2b und der Fig.3 beschriebene Regelungs- bzw. Verfahrensprinzip ist erfindungsgemäß ebenso an den weiteren bzw. anderen Schaltelementen V2-V40 anwendbar.

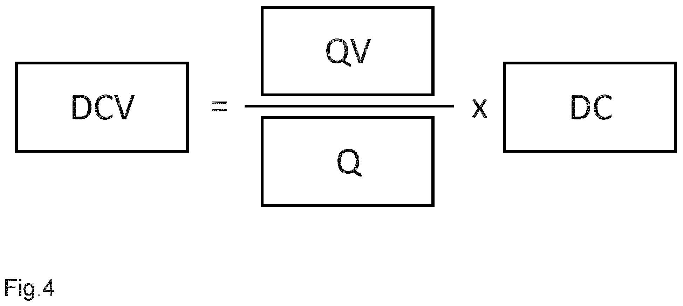

Des Weiteren kann der jeweilige Duty-Cycle DCV der Schaltelemente V1-V40 beispielsweise gemäß der in der Fig.4 abgebildeten Gleichung bestimmt werden. Der Duty-Cycle DCV wird hierbei auf Basis einer bestimmten und/oder vorgegebenen Durchschnittsöffnungsdauer bzw. eines Durchschnitts-Duty-Cycle DC bestimmt und/oder ermittelt. Dem Steuer- und/oder Regelsystem 200 wird zur Bestimmung des Durchschnitts-Duty-Cycle DC der notwendige Durchfluss Q, insbesondere die Durchflussmenge und/oder der Durchflussdruck, die Ausbringmenge auf zumindest eine Teilfläche, eine Fahrgeschwindigkeit des Spritzgeräts 100 und/oder die, insbesondere verwendete, Spritzdüse D1-D40 vorgegeben. Diese Werte sind zumindest teilweise von einem Bediener vorgebbar und/oder alternativ oder zusätzlich vom Steuer- und/oder Regelsystem 200 abrufbar und/oder bestimmbar. Insbesondere wird hierbei während der Ausbringung der notwendige Durchfluss Q, insbesondere die Durchflussmenge und/oder der Durchflussdruck, vom Steuer- und/oder Regelsystem 200 durch Variation des Durchschnitts-Duty-Cycle DC eingestellt. Des Weiteren werden aufgrund des teilflächenspezifisch unterschiedlichen Bedarfs der Nutzfläche an Spritzflüssigkeit S den Schaltelementen V1-V40 zugeordnete, insbesondere unterschiedliche, notwendige Ausbringmengen QV vorgegeben. Die, insbesondere auf jeweils ein Schaltelement V1-V40 bezogenen, notwendigen Ausbringmengen QV werden hierbei vom Steuer- und/oder Regelsystem 200 abgerufen und/oder bestimmt, wobei die Ausbringmengen QV alternativ oder zusätzlich auch manuell von einem Bediener vorgebbar sind. Die Öffnungsdauer bzw. der Duty-Cycle DCV eines jeweiligen Schaltelements V1-V40 basiert folglich, insbesondere gemäß der gezeigten Gleichung in Fig.4, zumindest auf dem Durchschnitts-Duty-Cycle DC, dem Durchfluss Q und der notwendigen Ausbringmenge QV.

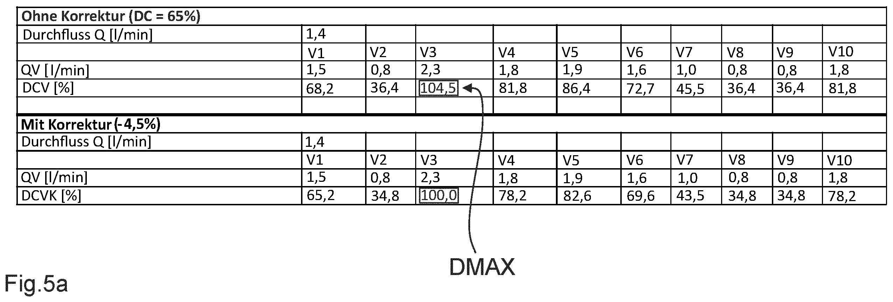

Ergeben sich während der Ausbringung bzw. des Betriebs Öffnungsdauern bzw. Duty-Cycle DCV die die jeweiligen zugeordneten Grenzöffnungsdauern bzw. Grenz-Duty-Cycle GU1-GO2 über- bzw. unterschreiten, werden die Duty-Cycle DCV der Schaltelemente V1-V40 erfindungsgemäß und wie folgend beispielhaft anhand der Fig.5a bis Fig.5c beschrieben korrigiert. Die in den Figuren 5a - 5b gezeigten Ausführungsbeispiele werden aus Gründen der Übersichtlichkeit, von links gesehen, anhand der ersten zehn Schaltelemente V1-V10 und Spritzdüsen D1-D10 näher erläutert, wobei insbesondere mit den restlichen Schaltelementen V11-V40 analog dazu verfahren werden soll. In den dargestellten beispielhaften Szenarien ist die obere Grenzöffnungsdauer bzw. der obere Grenz-Duty-Cycle GO1, GO2 mit 100% und die untere Grenzöffnungsdauer bzw. der untere Grenz-Duty-Cycle GU1, GU2 mit 30% vorgegeben. Des Weiteren wird auf Basis des Bedarfs an Spritzflüssigkeit S der Nutzfläche eine Durchschnittsöffnungsdauer bzw. ein Durchschnitts-Duty-Cycle DC von zumindest in etwa 65% vorgegeben und/oder eingestellt. Die zumindest eine Fördereinheit, insbesondere Förderpumpe, stellt einen Durchfluss Q, insbesondere eine als Volumenstrom ausgeführte Durchflussmenge, der Spritzflüssigkeit S innerhalb der Fluidleitungen 104 ein. Insbesondere stellt der Durchfluss Q hierbei einen Mittelwert der über die Stellelemente V1-V10, insbesondere Spritzdüsen D1-D10, auszubringenden Ausbringmengen QV dar.

Die Fig.5a zeigt ein beispielhaftes Szenario, bei dem ein Durchfluss Q, insbesondere eine durchschnittliche Durchflussmenge, mit etwa 1,43 l/min gefordert, vorgegeben und/oder eingestellt wird. Auf dieser Basis und gemäß der zuvor beschriebenen Gleichung ergeben sich die in den Spalten der oberen Tabellenhälfte aufgeführten und den jeweiligen Schaltelementen V1-V10 zugeordneten, insbesondere individuellen, Duty-Cycle DCV. Da hierbei der dem Schaltelement V3 zugeordnete Duty-Cycle DCV von 104,5 % den oberen Grenz-Duty-Cycle GO1, GO2 überschreitet, wird dieser und werden die anderen, insbesondere alle den jeweiligen Schaltelementen V1-V10 zugeordneten Duty-Cycle DCV entsprechend, insbesondere durch eine Verringerung, korrigiert.

Das Steuer- und/oder Regelsystem 200 ermittelt hierbei eine maximale Öffnungsdauer bzw. einen maximalen Duty-Cycle DMAX aus der ersten und weiteren Öffnungsdauer bzw. dem ersten und weiteren Duty-Cycle DCV, welcher die obere Grenzöffnungsdauer bzw. den oberen Grenz-Duty-Cycle GO1, GO2 überschreiten. Insbesondere wird hierbei eine maximale Differenz zwischen dem oberen Grenz-Duty-Cycle GO1, GO2 und dem maximalen ersten und/oder weiteren Duty-Cycle DCV, welcher den oberen Grenz-Duty-Cycle GO1, GO2 überschreitet, ermittelt, wobei die maximale Differenz hierbei in etwa 4,5% beträgt. Folgend werden die den Schaltelementen V1-V10 zugeordneten, insbesondere alle ersten und weiteren, Duty-Cycle DCV in Abhängigkeit des ermittelten maximalen Duty-Cycle DMAX, insbesondere der maximalen Differenz zum oberen Grenz-Duty-Cycle GO1, GO2, korrigiert, wie in der unteren Hälfte der in Fig.5a gezeigten Tabelle zu sehen ist. Somit werden vom Steuer- und/oder Regelsystem 200 entsprechend korrigierte Duty-Cycle DCVK ermittelt und/oder bestimmt die den jeweiligen Schaltelementen V1-V10, insbesondere zur zumindest im Wesentlichen Aufrechterhaltung bzw. Beibehaltung des Durchflusses Q und/oder der notwendigen Ausbringmengen QV, zugeordnet werden.

Durch eine gemäß der in Fig.5a ausgeführten Korrektur der ersten und weiteren Öffnungsdauer wird außerdem die im vorherigen Schritt, insbesondere vom Steuer- und/oder Regelsystem 200, bestimmte Durchschnittsöffnungsdauer bzw. der Durchschnitts-Duty-Cycle DC angepasst. Insbesondere wird die angepasste Durchschnittsöffnungsdauer bzw. der Durchschnitts-Duty-Cycle DC hierbei aus einem Mittelwert der korrigierten Öffnungsdauern bzw. Duty-Cycle DCVK gebildet.

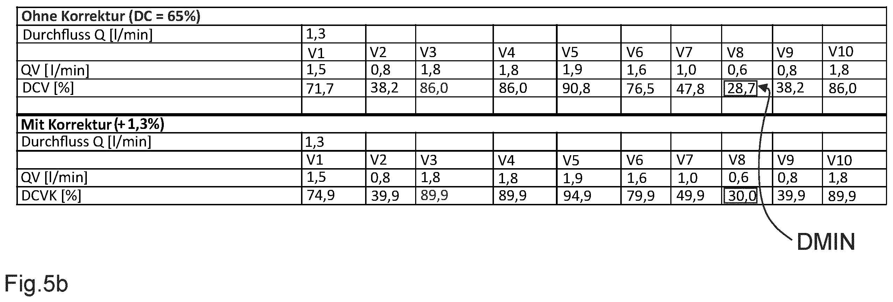

In der Fig.5b ist ein Szenario gezeigt, bei dem ein Durchfluss Q, insbesondere eine durchschnittliche Durchflussmenge, mit etwa 1,36 l/min gefordert, vorgegeben und/oder eingestellt wird und dabei der untere Grenz-Duty-Cycle GU1, GU2 unterschritten wird. Hierbei wird vom Steuer- und/oder Regelsystem 200 eine minimale Öffnungsdauer bzw. ein minimaler Duty-Cycle DMIN aus der ersten und weiteren Öffnungsdauer bzw. dem ersten und weiteren Duty-Cycle DCV, welcher die untere Grenzöffnungsdauer bzw. den unteren Grenz-Duty-Cycle GU1, GU2 unterschreitet, ermittelt. Insbesondere wird hierbei eine maximale Differenz zwischen dem unteren Grenz-Duty-Cycle GU1, GU2 und dem minimalen ersten und/oder weiteren Duty-Cycle DCV, welcher den unteren Grenz-Duty-Cycle GU1, GU2 unterschreitet, ermittelt. Der minimale Duty-Cycle DMIN ist hierbei der Duty-Cycle DCV des Stellelementes V8 und beträgt gemäß der Gleichung aus der Fig.4 in etwa 28,7%. Dies entspricht insbesondere einer maximalen Differenz von etwa 1,3% zum unteren Grenz-Duty-Cycle GU1, GU2. Folgend werden die den Schaltelementen V1-V10 zugeordneten, insbesondere alle ersten und weiteren, Duty-Cycle DCV in Abhängigkeit des ermittelten minimalen Duty-Cycle DMIN, insbesondere der maximalen Differenz zum unteren Grenz-Duty-Cycle GU1, GU2, korrigiert, wie in der unteren Hälfte der in Fig.5b gezeigten Tabelle zu sehen ist. Somit werden vom Steuer- und/oder Regelsystem 200 entsprechend korrigierte Duty-Cycle DCVK ermittelt und/oder bestimmt und die den jeweiligen Schaltelementen V1-V10, insbesondere zur zumindest im wesentlichen Aufrechterhaltung bzw. Beibehaltung des Durchflusses Q und/oder der Ausbringmengen QV, zugeordnet. Insbesondere werden bei dieser Regelung die zuvor ermittelten und/oder bestimmten Duty-Cycle DCV, insbesondere durch eine Erhöhung, gemeinsam auf den korrigierten Duty-Cycle DCVK korrigiert.

Insbesondere wird die Durchschnittsöffnungsdauer bzw. der Durchschnitts-Duty-Cycle DC durch die Korrektur entsprechend, wie im vorherigen Beispiel anhand der Fig.5a bereits beschrieben, auf die korrigierten Öffnungsdauern bzw. Duty-Cycle DCVK angepasst.

Alternativ oder zusätzlich zu, insbesondere vor, der in Fig.5b beschriebenen Korrektur kann vom Steuer- und/oder Regelsystem 200 überprüft werden, ob durch eine Pulsweitenfrequenzmodulation (PWFM), insbesondere durch eine Reduzierung der jeweiligen Pulsfrequenzen der Schaltelemente V1-V10, der untere Grenz-Duty-Cycle GU1, GU2, insbesondere bei zumindest nahezu gleich bleibender Ausbringung und/oder innerhalb eines Akzeptanzbereichs, auf den minimalen Duty-Cycle DMIN angepasst werden kann. Insbesondere wird in diesem Ausführungsbeispiel überprüft ob der zumindest eine untere Grenz-Duty-Cycle GU1, GU2, des Schaltelementes V8 auf den minimalen Duty-Cycle DMIN angepasst werden kann. Ferner kann alternativ oder zusätzlich hierzu zur Anpassung der notwendigen Ausbringmenge QV und der damit zusammenhängenden Öffnungsdauer bzw. dem Duty-Cycle DCV auch die Fahrgeschwindigkeit des Spritzgeräts 100, insbesondere zumindest temporär soweit verringert werden, dass die untere Grenzöffnungsdauer, insbesondere der untere Grenz-Duty-Cycle GU1, GU2, vom minimalen Duty-Cycle DMIN nicht unterschritten wird.

Zur Korrektur der ersten und/oder weiteren Öffnungsdauer bzw. des ersten und/oder weiteren Duty-Cycles DCV wird vom Steuer- und/oder Regelsystem 200 zumindest ein, insbesondere gemeinsamer, Korrekturfaktor in Abhängigkeit der maximalen oder minimalen Öffnungsdauer bzw. des maximalen oder minimalen Duty-Cycles DMAX, DMIN, insbesondere der maximalen Differenz, ermittelt. Insbesondere umfasst der Korrekturfaktor dabei die maximale oder minimale Öffnungsdauer bzw. den maximalen oder minimalen Duty-Cycle DMAX, DMIN. Alternativ oder zusätzlich kann der Korrekturfaktor dabei auch die obere und/oder untere Grenzöffnungsdauer bzw. den oberen und/oder unteren Grenz-Duty-Cycle GU1-GO2 umfassen. Darüber hinaus kann der Korrekturfaktor in einer weiteren alternativen Ausführungsform zumindest teilweise aus der, insbesondere maximalen, Differenz zwischen dem maximalen oder minimalen Duty-Cycle DMAX, DMIN und dem oberen und/oder unteren Grenz-Duty-Cycle GU1-GO2 gebildet werden. Der zumindest eine, insbesondere gemeinsame, Korrekturfaktor wird zur Korrektur des ersten und/oder weiteren Duty-Cycles DCV mit der Durchschnittsöffnungsdauer bzw. dem Durchschnitts-Duty-Cycle DC und/oder der jeweiligen den Schaltelemente V1-V10 zugeordneten Ausbringmenge QV verrechnet.

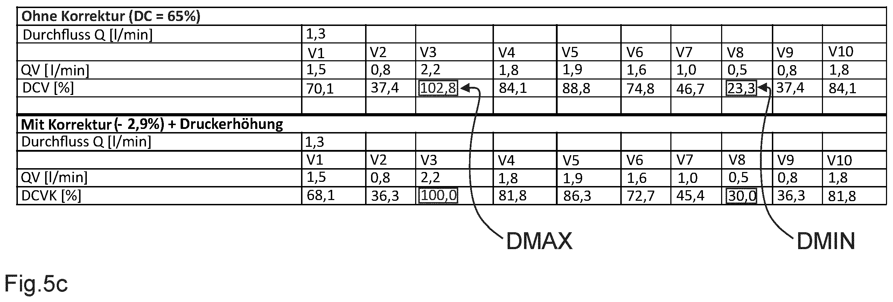

Die Fig.5c zeigt ein beispielhaftes Szenario, bei dem ein Durchfluss Q, insbesondere eine durchschnittliche Durchflussmenge, mit etwa 1,39 l/min gefordert, vorgegeben und/oder eingestellt wird und sowohl der obere Grenz-Duty-Cycle GO1, GO2 überschritten als auch der untere Grenz-Duty-Cycle GU1, GU2 unterschritten wird. Der gemäß der ursprünglichen Gleichung ermittelte Duty-Cycle DCV des Schaltelementes V3 beträgt hierbei etwa 102,9% und überschreitet somit den definierten obere Grenz-Duty-Cycle GO1, GO2, insbesondere mit einer Differenz von etwa 2,9%. Der gemäß der ursprünglichen Gleichung ermittelte Duty-Cycle DCV des Schaltelementes V8 beträgt etwa 23,4% und unterschreitet somit den definierten unteren Grenz-Duty-Cycle GU1, GU2, insbesondere mit einer Differenz von 6,6%. Innerhalb eines derartigen Szenarios werden die zugeordneten Duty-Cycle DCV aller Schaltelemente V1-V10, ausgenommen der Schaltelement V1-V10 welche den unteren Grenz-Duty-Cycle GU1, GU2 unterschreiten, gemäß dem in der Fig.5a beschriebenen Szenario, bei dem der obere Grenz-Duty-Cycle GO1, GO2 überschritten wird, korrigiert. Insbesondere werden hierbei die Duty-Cycle DCV sämtlicher Schaltelemente V1-V10, ausgenommen des Schaltelementes V8, durch eine Verringerung der bestimmten Duty-Cycle DCV auf die korrigierten Duty-Cycle DCVK korrigiert. Entsprechend wird der Duty-Cycle DCV des Schaltelementes V3 auf einen korrigierten Duty-Cycle DCVK um etwa 2,9% auf 100%, insbesondere den oberen Grenz-Duty-Cycle GO1, GO2 verringert. Darüber hinaus werden die Duty-Cycle DCV der Schaltelemente V1, V2, V4-V7, V9, V10 um etwa 2,9% des jeweiligen Duty-Cycle DCV reduziert und so auf die jeweiligen korrigierten Duty-Cycle DCVK angepasst. Der Duty-Cycle DCV des Schaltelementes V8 wird auf den unteren Grenz-Duty-Cycle GU1, GU2 angepasst. Im Durchschnitt, insbesondere über alle Schaltelemente V1-V10, gesehen resultiert hierbei eine Verringerung der Duty-Cycle DCV, wodurch damit eine Erhöhung des Durchflussdrucks im Gesamtsystem bzw. des Fördersystems einhergeht und/oder akzeptiert wird.

Alternativ oder zusätzlich zu diesem Szenario wird oberprüft ob eine Anpassung, insbesondere durch eine Pulsweitenfrequenzmodulation, des unteren Grenz-Duty-Cycle GU1, GU2 des zumindest einen Schaltelementes V8 auf den ermittelten minimalen Duty-Cycle DMIN zulässig und/oder erreichbar ist. Ferner kann hierbei alternativ oder zusätzlich zuvor überprüft werden, ob mittels einer Anpassung, insbesondere Reduzierung, der Fahrgeschwindigkeit des Spritzgeräts 100 eine Anpassung des unteren Grenz-Duty-Cycles GU1, GU2 auf den ermittelten minimalen Duty-Cycle DMIN zulässig und/oder erreichbar ist. Insbesondere kann dabei dem Bediener und/oder dem Steuer- und/oder Regelsystem 200 eine ermittelte korrigierte Fahrgeschwindigkeit vorgeschlagen werden mittels der der untere Grenz-Duty-Cycles GU1, GU2 auf den ermittelten minimalen Duty-Cycle DMIN angepasst werden kann, wobei der Bediener manuell und/oder das Steuer- und/oder Regelsystem 200 automatisiert anhand von Entscheidungs- und/oder Rechenoperationen die korrigierte Fahrgeschwindigkeit übernehmen kann.

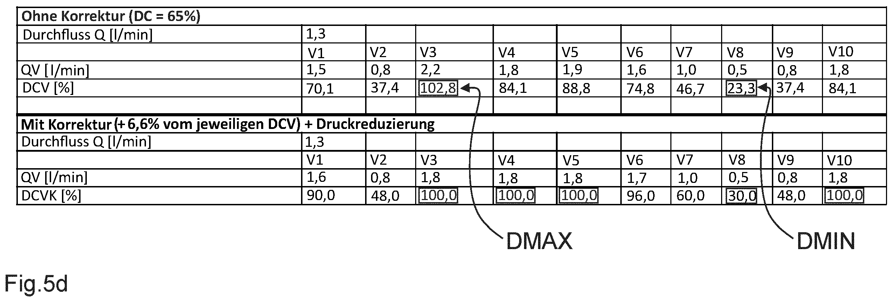

Ein zu der in Fig.5c gezeigtes alternatives und/oder zusätzliches Szenario, insbesondere eine alternative Korrektur, ist in Fig.5d gezeigt. Die Ausgangsbedingungen, insbesondere die vor der Korrektur vorliegenden Werte wie der Durchfluss Q, die Grenz-Duty-Cycle GU1-GO2, die ermittelten Duty-Cycle DCV als auch die zugeordneten Ausbringmenge QV, entsprechen den Werten aus der Fig.5c. In diesem Szenario werden die zugeordneten Duty-Cycle DCV aller Schaltelemente V1-V10, ausgenommen der Schaltelement V1-V10 welche den oberen Grenz-Duty-Cycle GO1, GO2 überschreiten, gemäß dem in der Fig.5b beschriebenen Szenario, bei dem der untere Grenz-Duty-Cycle GU1, GU2 unterschritten wird, korrigiert. Insbesondere werden hierbei die Duty-Cycle DCV sämtlicher Schaltelemente V1-V10, ausgenommen der Schaltelemente V3-V5 und V10, durch eine Erhöhung der bestimmten Duty-Cycle DCV auf die korrigierten Duty-Cycle DCVK korrigiert. Entsprechend wird der Duty-Cycle DCV des Schaltelementes V8 auf einen korrigierten Duty-Cycle DCVK um etwa 6,6% auf 30%, insbesondere den unteren Grenz-Duty-Cycle GU1, GU2 erhöht. Darüber hinaus werden die Duty-Cycle DCV der Schaltelemente V1, V2, V6, V7, V9 um etwa 6,6% des jeweiligen Duty-Cycle DCV erhöht und so auf die jeweiligen korrigierten Duty-Cycle DCVK angepasst. Die Duty-Cycle DCV der Schaltelemente V3-V5 und V10 werden auf den oberen Grenz-Duty-Cycle GO1, GO2 angepasst. Im Durchschnitt, insbesondere über alle Schaltelemente V1-V10, gesehen resultiert hierbei eine Erhöhung der Duty-Cycle DCV, wodurch damit eine Verringerung des Durchflussdrucks im Gesamtsystem bzw. des Fördersystems einhergeht und/oder akzeptiert wird.

Darüber hinaus kann in den beschriebenen Regelungen und/oder Verfahren alternativ oder zusätzlich eine zulässige Fahrgeschwindigkeit, insbesondere ein zulässiger Fahrgeschwindigkeitsbereich, für das Spritzgerät 100 während der Ausbringung ermittelt werden. Die zulässige Fahrgeschwindigkeit, insbesondere der Fahrgeschwindigkeitsbereich, wird dabei anhand der zumindest einen, insbesondere oberen und/oder unteren, Grenzöffnungsdauer GU1-GO2, der, insbesondere ausgewählten, Spritzdüsen D1-D40 und/oder der jeweiligen notwendigen Ausbringmengen QV ermittelt. Insbesondere kann hierbei alternativ oder zusätzlich ein vom Steuer- und/oder Regelsystem 200 abrufbares Fahrgeschwindigkeitsprofil und/oder eine für die zu bearbeitende Nutzfläche und/oder Konfiguration des Spritzgeräts 100 maximale zulässige Fahrgeschwindigkeit ermittelt und/oder bestimmt werden. Ferner wird dem Bediener hierbei alternativ oder zusätzlich eine Über- bzw. Unterschreitung der, insbesondere maximal, zulässigen Fahrgeschwindigkeit, insbesondere des Fahrgeschwindigkeitsbereiches, durch die aktuelle Fahrgeschwindigkeit des Spritzgeräts 100 visualisiert. Eine visuelle und/oder akustische Alarmierung ist hierbei ebenso denkbar. Des Weiteren ist alternativ oder zusätzlich auch eine, insbesondere durch das Steuer- und/oder Regelsystem 200, automatisierte Anpassung der aktuellen Fahrgeschwindigkeit auf die zulässige Fahrgeschwindigkeit denkbar.

Ferner kann hierbei alternativ oder zusätzlich die zulässige Fahrgeschwindigkeit, insbesondere der Fahrgeschwindigkeitsbereich, zumindest temporär durch eine Veränderung der, insbesondere oberen und/oder unteren, Grenz-Duty-Cycle GU1-GO2 angepasst werden. Die Grenz-Duty-Cycle GU1-GO2 können hierbei insbesondere durch eine Anpassung der den Schaltelementen V1-V40 zugeordneten Pulsfrequenz verändert werden.

Des Weiteren ist zu den beschriebenen Regelungen und/oder Verfahren alternativ oder zusätzlich denkbar, dass eine zuvor definierte und/oder vorgegebene Regelstrategie auswählbar ist, durch die dem Steuer- und/oder Regelsystem 200 vorgebbar ist, welches der in den Fig.5a - 5d beschriebenen Szenarien bzw. der Korrekturen bei einer Überschreitung bzw. Unterschreitung der Grenz-Duty-Cycle GU1-GO2 umgesetzt wird. Insbesondere ist im Vorfeld zur Ausbringung zumindest eine aus mehreren Regelstrategien auswählbar, die im Fall einer, insbesondere gleichzeitigen, Überschreitung und Unterschreitung der Grenz-Duty-Cycle GU1-GO2 gemäß den Szenarien aus Fig.5c oder Fig.5d festlegt, welche Art der Korrektur vorgenommen wird, insbesondere ob eher eine Erhöhung oder eine Verringerung des Durchflussdrucks akzeptiert und/oder vorgegeben wird.

Es versteht sich, dass in den Ausführungsbeispielen beschriebene Zahlenwerte nur beispielhaft sind und je nach Bedarf beliebig angepasst werden können.

### Bezugszeichenliste

- 100: Spritzgerät
- 101: Vorratsbehälter
- 102: Verteilergestänge
- 104: Förderleitungen
- 200: Steuer- und/oder Regelsystem

- D1-D40: Spritzdüsen
- DC: Durchschnitts-Duty-Cycle
- DCV: Öffnungsdauer, Duty-Cycle der Schaltelemente
- DCVK: korrigierte Öffnungsdauer, korrigierte Duty-Cycle
- DMAX: maximale Grenzöffnungsdauer, maximaler Duty-Cycle
- DMIN: minimale Grenzöffnungsdauer, minimaler Duty-Cycle
- GU1, GU2: untere Grenzöffnungsdauer, unterer Grenz-Duty-Cycle
- GO1, GO2: obere Grenzöffnungsdauer, oberer Grenz-Duty-Cycle
- Q: Durchfluss
- QV: Ausbringmenge über Schaltelemente
- S: Spritzflüssigkeit
- T1: ersten Periodendauer
- T2: zweite Periodendauer
- V1-V40: Schaltelemente

## Patentansprüche

1. Verfahren zum Ausbringen einer Spritzflüssigkeit (S) auf einer landwirtschaftlichen Nutzfläche über mehrere an einem landwirtschaftlichen Spritzgerät (100) angeordneten und nach Art einer Pulsweitenmodulation (PWM) steuer- und/oder regelbaren Schaltelemente (V1-V40), wobei die Spritzflüssigkeit (S) bedarfsgerecht, insbesondere mittels den jeweiligen Schaltelementen (V1-V40) zugeordneten Spritzdüsen (D1-D40), auf der landwirtschaftlichen Nutzfläche ausgebracht wird, mit den Schritten:
- Bestimmen einer einem ersten Schaltelement (V1-V40) zugeordneten ersten Öffnungsdauer (DCV) und zumindest einer einem weiteren Schaltelement (V1-V40) zugeordneten weiteren Öffnungsdauer (DCV); wobei die Ausbringung der Spritzflüssigkeit (S) über die jeweilige Öffnungsdauer (DCV) zumindest teilweise beeinflusst wird,
- Verwenden zumindest einer den Schaltelementen (V1-V40) zugeordneten oberen und/oder unteren Grenzöffnungsdauer (GU1-GO2); und
- Vergleichen der ersten und weiteren bestimmten Öffnungsdauer (DCV) mit der oberen und/oder unteren Grenzöffnungsdauer (GU1-GO2);
**dadurch gekennzeichnet, dass** bei einem Überschreiten der oberen Grenzöffnungsdauer (GO1, GO2) und/oder einem Unterschreiten der unteren Grenzöffnungsdauer (GU1, GU2) durch eine der ersten oder weiteren bestimmten Öffnungsdauer (DCV), zur zumindest teilweisen Aufrechterhaltung der bedarfsgerechten Ausbringung, die erste und weitere Öffnungsdauer (DCV), vorzugsweise durch eine Erhöhung und/oder Verringerung, entsprechend gemeinsam korrigiert werden.

2. Verfahren nach Anspruch 1, **gekennzeichnet durch** die folgenden Schritte:
- Ermitteln einer maximalen oder minimalen Öffnungsdauer (DMAX, DMIN) oder einer, vorzugsweise maximalen, Differenz zwischen der Grenzöffnungsdauer (GU1-GO2) und der zumindest einen ersten und/oder weiteren Öffnungsdauer (DCV), welche die obere Grenzöffnungsdauer (GO1, GO2) überschreitet oder die untere Grenzöffnungsdauer (GU1, GU2) unterschreitet; und
- Korrigieren der zumindest einen ersten und weiteren Öffnungsdauer (DCV) in Abhängigkeit der ermittelten maximalen oder minimalen Öffnungsdauer (DMAX, DMIN) oder der, vorzugsweise maximalen, Differenz.

3. Verfahren nach zumindest einem der vorgenannten Ansprüche, **dadurch gekennzeichnet, dass** die einem jeweiligen Schaltelement (V1-V40) zugeordnete Öffnungsdauer aus einem prozentualen Duty-Cycle (DCV) und die, insbesondere obere und/oder untere, Grenzöffnungsdauer aus einem prozentualen, insbesondere oberen und/oder unteren, Grenz-Duty-Cycle (GU1-GO2) gebildet wird.

4. Verfahren nach Anspruch 3, **dadurch gekennzeichnet, dass** die Spritzflüssigkeit (S) auf der Basis einer bestimmten Durchschnittsöffnungsdauer, insbesondere einem Durchschnitts-Duty-Cycle (DC), über die Schaltelemente (V1-V40) ausgebracht wird, wobei die erste und weitere Öffnungsdauer, insbesondere der erste und weitere Duty-Cycle (DCV), auf der Basis der Durchschnittsöffnungsdauer, insbesondere dem Durchschnitts-Duty-Cycle (DC), bestimmt wird, und wobei vorzugsweise durch die Korrektur der ersten oder weiteren Öffnungsdauer, insbesondere des ersten oder des weiteren Duty-Cycle (DCV), die Durchschnittsöffnungsdauer, insbesondere der Durchschnitts-Duty-Cycle (DC), angepasst wird.

5. Verfahren nach Anspruch 4, **gekennzeichnet durch** den Schritt:
- Ermitteln zumindest eines, vorzugsweise gemeinsamen, Korrekturfaktors für die erste und weitere bestimmte Öffnungsdauer (DCV) in Abhängigkeit der maximalen oder minimalen Öffnungsdauer (DMAX, DMIN) oder der, vorzugsweise maximalen, Differenz; wobei zur Korrektur der ersten und weiteren Öffnungsdauer (DCV) der zumindest eine Korrekturfaktor mit der Durchschnittsöffnungsdauer, insbesondere dem Durchschnitts-Duty-Cycle (DC), verrechnet wird.

6. Verfahren nach Anspruch 5, **gekennzeichnet durch** den Schritt:
- Bestimmen zumindest einer wenigstens einem jeweiligen Schaltelement (V1-V40), insbesondere Spritzdüse (D1-D40), zugeordneten und von der jeweiligen Öffnungsdauer (DCV) abhängigen Ausbringmenge (QV); wobei zur Korrektur der ersten und weiteren Öffnungsdauer (DCV) der zumindest eine Korrekturfaktor mit der jeweiligen Ausbringmenge (QV) verrechnet wird.

7. Verfahren nach zumindest einem der vorgenannten Ansprüche, mit zumindest einem ersten Schaltelement (V1-V40) und einer Mehrzahl von weiteren Schaltelementen (V1-V40), wobei für das erste Schaltelement (V1-V40) eine erste Öffnungsdauer, insbesondere ein erster Duty-Cycle (DCV), und für die Mehrzahl von weiteren Schaltelementen (V1-V40) jeweils eine individuelle weitere Öffnungsdauer, insbesondere weiterer Duty-Cycle (DCV), bestimmt werden, **dadurch gekennzeichnet, dass** bei einem Überschreiten der oberen Grenzöffnungsdauer, insbesondere eines oberen Grenz-Duty-Cycle (GO1, GO2), und/oder einem Unterschreiten der unteren Grenzöffnungsdauer, insbesondere eines unteren Grenz-Duty-Cycle (GU1, GU2), die erste und die Mehrzahl der weiteren Öffnungsdauern, insbesondere der erste oder die weiteren Duty-Cycle (DCV) gemeinsam, korrigiert werden.

8. Verfahren nach zumindest einem der vorgenannten Ansprüche, **dadurch gekennzeichnet, dass** die Schaltelemente (V1-V40) nach Art einer Pulsweitenfrequenzmodulation steuer- und/oder regelbar sind, wobei die zumindest eine obere und/oder untere Grenzöffnungsdauer (GU1-GO2), vorzugsweise variabel, in Abhängigkeit wenigstens einer den jeweiligen Schaltelementen (V1-V40) zugeordneten Pulsfrequenz bestimmt wird.

9. Verfahren nach Anspruch 8, **gekennzeichnet durch** die Schritte:
- Überprüfen ob mit der zumindest einen bestimmten oberen und/oder unteren Grenzöffnungsdauer, insbesondere dem Grenz-Duty-Cycle (GU1-GO2), die notwendige Ausbringung der Spritzflüssigkeit (S) mit den jeweiligen Schaltelementen (V1-V40) erreicht wird; und
- Korrigieren der zumindest einen oberen und/oder unteren Grenzöffnungsdauer, insbesondere dem Grenz-Duty-Cycle (GU1-GO2), durch eine Anpassung der jeweiligen einem Schaltelemente (V1-V40) zugeordneten Pulsfrequenz.

10. Verfahren nach zumindest einem der vorgenannten Ansprüche, wobei die Spritzflüssigkeit (S) den Schaltelementen (V1-V40) mit einem definierten Durchflussdruck zugebracht wird, **dadurch gekennzeichnet, dass** der Durchflussdruck durch das Überschreiten der oberen Grenzöffnungsdauer (GO1, GO2) entsprechend erhöht oder durch das Unterschreiten der unteren Grenzöffnungsdauer (GU1, GU2) entsprechend verringert wird.

11. Verfahren nach zumindest einem der vorgenannten Ansprüche, **gekennzeichnet durch** zumindest einen der folgenden Schritte:
- Ermitteln einer zulässigen Fahrgeschwindigkeit, vorzugsweise eines zulässigen Fahrgeschwindigkeitsbereiches, für das Spritzgerät (100) während der Ausbringung anhand der zumindest einen, vorzugsweise oberen und/oder unteren, Grenzöffnungsdauer (GU1-GO2), der, insbesondere ausgewählten, Spritzdüsen (D1-D40) und/oder der jeweiligen Ausbringmengen (QV); und/oder
- Visualisierung und/oder Alarmierung für den Bediener bei einem Über- bzw. Unterschreiten einer zulässigen Fahrgeschwindigkeit, vorzugsweise eines Fahrgeschwindigkeitsbereiches; und/oder
- Anpassen einer zulässigen Fahrgeschwindigkeit, vorzugsweise eines zulässigen Fahrgeschwindigkeitsbereiches, durch Verändern der zumindest einen oberen und/oder unteren Grenzöffnungsdauer (GU1-GO2), insbesondere der Pulsfrequenz.

12. Landwirtschaftliches Spritzgerät (100) mit zumindest einem zugeordneten Steuer- und/oder Regelsystem (200), insbesondere zum Steuern und/oder Regeln des Spritzgeräts (100), **dadurch gekennzeichnet, dass** das landwirtschaftliche Spritzgerät (100), insbesondere mittels des Steuer- und/oder Regelsystems (200), dazu eingerichtet ist, das Verfahren nach zumindest einem der vorgenannten Ansprüche auszuführen.

## Claims

1. Method for spreading a spray liquid (S) on an agricultural area via a plurality of switching elements (V1-V40) which are arranged on an agricultural sprayer (100) and are controllable in an open and/or closed loop in the manner of pulse width modulation (PWM), wherein the spray liquid (S) is spread on the agricultural area as required, in particular by means of the spray nozzles (D1-D40) respectively assigned to the switching elements (V1-V40), comprising the steps of:
- determining a first opening duration (DCV) assigned to a first switching element (V1-V40) and at least one further opening duration (DCV) assigned to a further switching element (V1-V40); wherein spreading the spray liquid (S) is at least partially influenced by the respective opening durations (DCV),
- using at least one upper and/or lower limit opening duration (GU1-GO2) assigned to the switching elements (V1-V40); and
- comparing the first and further determined opening durations (DCV) with the upper and/or lower limit opening duration (GU1-GO2);
**characterized in that** if one of the first or further determined opening durations (DCV) exceeds the upper limit opening duration (GO1, GO2) and/or falls below the lower limit opening duration (GU1, GU2), the first and further opening durations (DCV) are correspondingly jointly corrected, preferably by being increased and/or decreased, in order to at least partially continue spreading as required.

2. Method according to claim 1, **characterized by** the following steps:
- ascertaining a maximum or minimum opening duration (DMAX, DMIN) or a difference, preferably a maximum difference, between the limit opening duration (GU1-GO2) and the at least one first and/or further opening durations (DCV) which exceeds the upper limit opening duration (GO1, GO2) or falls below the lower limit opening duration (GU1, GU2); and
- correcting the at least one first and further opening durations (DCV) on the basis of the ascertained maximum or minimum opening duration (DMAX, DMIN) or the difference, preferably the maximum difference.

3. Method according to at least one of the preceding claims, **characterized in that** the opening durations assigned to each switching element (V1-V40) are formed from a percentage duty cycle (DCV) and the limit opening duration, in particular the upper and/or lower limit opening duration, is formed from a percentage limit duty cycle (GU1-GO2), in particular a percentage upper and/or lower limit duty cycle.

4. Method according to claim 3, **characterized in that** the spray liquid (S) is spread via the switching elements (V1-V40) on the basis of a determined average opening duration, in particular an average duty cycle (DC), wherein the first and further opening durations, in particular the first and further duty cycles (DCV), are determined on the basis of the average opening duration, in particular the average duty cycle (DC), and wherein the average opening duration, in particular the average duty cycle (DC), is adapted preferably by correcting the first or further opening durations, in particular the first or further duty cycles (DCV).

5. Method according to claim 4, **characterized by** the step of:
- ascertaining at least one correction factor, preferably a joint correction factor, for the first and further determined opening durations (DCV) on the basis of the maximum or minimum opening duration (DMAX, DMIN) or the difference, preferably the maximum difference; wherein in order to correct the first and further opening durations (DCV), the at least one correction factor is offset against the average opening duration, in particular the average duty cycle (DC).

6. Method according to claim 5, **characterized by** the step of:
- determining at least one spreading rate (QV) which is assigned to at least one switching element (V1-V40), in particular spray nozzle (D1-D40), and is dependent on the associated opening duration (DCV); wherein in order to correct the first and further opening durations (DCV), the at least one correction factor is offset against the associated spreading rate (QV).

7. Method according to at least one of the preceding claims, comprising at least a first switching element (V1-V40) and a plurality of further switching elements (V1-V40), wherein a first opening duration, in particular a first duty cycle (DCV), is determined for the first switching element (V1-V40), and an individual further opening duration, in particular an individual further duty cycle (DCV), is determined for each of the plurality of further switching elements (V1-V40), **characterized in that** if the upper limit opening duration, in particular an upper limit duty cycle (GO1, GO2), is exceeded and/or the lower limit opening duration, in particular a lower limit duty cycle (GU1, GU2), is fallen below, the first and the plurality of the further opening durations, in particular the first or the further duty cycles (DCV) together, are corrected.

8. Method according to at least one of the preceding claims,
**characterized in that** the switching elements (V1-V40) are controllable in an open and/or closed loop in the manner of pulse width frequency modulation, wherein the at least one upper and/or lower limit opening duration (GU1-GO2) is determined, preferably variably, on the basis of at least one pulse frequency assigned to the respective switching elements (V1-V40).

9. Method according to claim 8, **characterized by** the steps of:
- checking whether the spray liquid (S) is spread as necessary with the respective switching elements (V1-V40) with at least one determined upper and/or lower limit opening duration, in particular the limit duty cycle (GU1-GO2); and
- correcting at least one upper and/or lower limit opening duration, in particular the limit duty cycle (GU1-GO2), by adapting the pulse frequency assigned to each switching element (V1-V40).

10. Method according to at least one of the preceding claims, wherein the spray liquid (S) is supplied to the switching elements (V1-V40) at a defined throughflow pressure, **characterized in that** the throughflow pressure is correspondingly increased by exceeding the upper limit opening duration (GO1, GO2) or correspondingly decreased by falling below the lower limit opening duration (GU1, GU2).

11. Method according to at least one of the preceding claims, **characterized by** at least one of the following steps:
- ascertaining, using the at least one limit opening duration (GU1-GO2), preferably the at least one upper and/or lower limit opening duration, the in particular selected spray nozzles (D1-D40) and/or the respective spreading rates (QV), a permissible travel speed, preferably a permissible travel speed range, for the sprayer (100) during spreading; and/or
- visualizing and/or signaling via alarm for the operator if a permissible travel speed, preferably a travel speed range, is exceeded or fallen below; and/or
- adapting a permissible travel speed, preferably a permissible travel speed range, by changing the at least one upper and/or lower limit opening duration (GU1-GO2), in particular the pulse frequency.

12. Agricultural sprayer (100) with at least one assigned open- and/or closed-loop control system (200), in particular for controlling the sprayer (100) in an open and/or closed loop, **characterized in that** the agricultural sprayer (100) is configured, in particular by means of the open- and/or closed-loop control system (200), to carry out the method according to at least one of the preceding claims.

## Revendications

1. Procédé permettant d'épandre un liquide de pulvérisation (S) sur une surface agricole par l'intermédiaire de plusieurs éléments de commutation (V1-V40) agencés sur un appareil pulvérisateur (100) agricole et pouvant être commandés et/ou régulés selon le principe d'une modulation de largeur d'impulsion (PWM), dans lequel le liquide de pulvérisation (S) est épandu sur la surface agricole en fonction des besoins, notamment par le biais de buses de pulvérisation (D1-D40) associées aux éléments de commutation (V1-V40) respectifs, comportant les étapes suivantes :
- détermination d'une première durée d'ouverture (DCV) associée à un premier élément de commutation (V1-V40) et d'au moins une autre durée d'ouverture (DCV) associée à un autre élément de commutation (V1-V40) ; dans lequel l'épandage du liquide de pulvérisation (S) est au moins partiellement influencé par la durée d'ouverture (DCV) respective,
- utilisation d'au moins une durée d'ouverture limite supérieure et/ou inférieure (GU1-GO2) associée aux éléments de commutation (V1-V40) ; et
- comparaison de la première et autre durée d'ouverture (DCV) déterminées avec les durées d'ouverture limites supérieure et/ou inférieure (GU1-GO2) ;
**caractérisé en ce que,** en cas de dépassement de la durée d'ouverture limite supérieure (GO1, GO2) et/ou de passage en dessous de la durée d'ouverture limite inférieure (GU1, GU2) par l'une des premières ou autre durées d'ouverture (DCV) déterminées, afin de maintenir au moins partiellement l'épandage en fonction des besoins, les première et autre durées d'ouverture (DCV) sont corrigées conjointement de manière correspondante, de préférence par une augmentation et/ou une diminution.

2. Procédé selon la revendication 1, **caractérisé par** les étapes suivantes :
- établissement d'une durée d'ouverture maximale ou minimale (DMAX, DMIN) ou d'une différence, de préférence maximale, entre la durée d'ouverture limite (GU1-GO2) et l'au moins une première et/ou autre durée d'ouverture (DCV), qui dépasse la durée d'ouverture limite supérieure (GO1, GO2) ou qui passe en dessous de la durée d'ouverture limite inférieure (GU1, GU2) ; et
- correction de l'au moins une première et autre durée d'ouverture (DCV) en fonction de la durée d'ouverture maximale ou minimale (DMAX, DMIN) établie ou de la différence, de préférence maximale.

3. Procédé selon au moins l'une des revendications précédentes, **caractérisé en ce que** la durée d'ouverture associée à un élément de commutation (V1-V40) respectif est formée d'un cycle de service (Duty-Cycle, DCV) exprimé en pourcentage et la durée d'ouverture limite, notamment supérieure et/ou inférieure, est constituée d'un cycle de service limite (GU1-GO2) exprimé en pourcentage, notamment supérieur et/ou inférieur.

4. Procédé selon la revendication 3, **caractérisé en ce que** le liquide de pulvérisation (S) est épandu sur la base d'une durée moyenne d'ouverture déterminée, notamment d'un cycle de service moyen (DC), par l'intermédiaire des éléments de commutation (V1-V40), dans lequel la première et l'autre durées d'ouverture, notamment le premier et l'autre cycles de service (DCV), sont déterminées sur la base de la durée d'ouverture moyenne, notamment du cycle de service moyen (DC), et dans lequel la durée d'ouverture moyenne, notamment le cycle de service moyen (DC), est de préférence adaptée par la correction de la première ou de l'autre durée d'ouverture, notamment du premier ou de l'autre cycle de service (DCV).

5. Procédé selon la revendication 4, **caractérisé par** l'étape :
- établissement d'au moins un facteur de correction, de préférence conjoint, pour la première et l'autre durée d'ouverture (DCV) déterminées en fonction de la durée d'ouverture maximale ou minimale (DMAX, DMIN) ou de la différence, de préférence maximale ; dans lequel, pour corriger la première et l'autre durées d'ouverture (DCV), l'au moins un facteur de correction est compensé avec la durée d'ouverture moyenne, notamment le cycle de service moyen (DC).

6. Procédé selon la revendication 5, **caractérisé par** l'étape :
- détermination d'au moins un débit d'épandage (QV) associé à au moins un élément de commutation (V1-V40) respectif, notamment une buse de pulvérisation (D1-D40), et dépendant de la durée d'ouverture (DCV) respective ; dans lequel, pour corriger la première et l'autre durées d'ouverture (DCV), l'au moins un facteur de correction est compensé avec le débit d'épandage (QV) respectif.

7. Procédé selon au moins l'une des revendications précédentes, comportant au moins un premier élément de commutation (V1-V40) et une pluralité d'autres éléments de commutation (V1-V40), dans lequel, pour le premier élément de commutation (V1-V40), une première durée d'ouverture, notamment un premier cycle de service (DCV), et, pour la pluralité d'autres éléments de commutation (V1-V40), respectivement une autre durée d'ouverture individuelle, notamment un autre cycle de service (DCV), sont déterminées, **caractérisé en ce que,** en cas de dépassement de la durée d'ouverture limite supérieure, notamment d'un cycle de service limite supérieur (GO1, GO2), et/ou en cas de passage en dessous de la durée d'ouverture limite inférieure, notamment d'un cycle de service limite inférieur (GU1, GU2), la première durée d'ouverture et la pluralité des autres durées d'ouverture, notamment le premier cycle de service ou les autres cycles de service (DCV), sont corrigées conjointement.

8. Procédé selon au moins l'une des revendications précédentes, **caractérisé en ce que** les éléments de commutation (V1-V40) peuvent être commandés et/ou régulés selon le principe d'une modulation de fréquence par largeur d'impulsion, dans lequel l'au moins une durée limite d'ouverture supérieure et/ou inférieure (GU1-GO2), de préférence variable, est déterminée en fonction d'au moins une fréquence d'impulsion associée aux éléments de commutation (V1-V40) respectifs.

9. Procédé selon la revendication 8, **caractérisé par** les étapes :
- vérification de si, avec l'au moins une durée limite d'ouverture supérieure et/ou inférieure déterminée, notamment le cycle de service limite (GU1-GO2), l'épandage nécessaire du liquide de pulvérisation (S) est atteint avec les éléments de commutation (V1-V40) respectifs ; et
- correction de l'au moins une durée limite d'ouverture supérieure et/ou inférieure, notamment du cycle de service limite (GU1-GO2), par une adaptation de la fréquence d'impulsion associée respectivement à un élément de commutation (V1-V40).

10. Procédé selon au moins l'une des revendications précédentes, dans lequel le liquide de pulvérisation (S) est acheminé vers les éléments de commutation (V1-V40) à une pression d'écoulement définie**,**
**caractérisé en ce que** la pression d'écoulement est augmentée de manière correspondante par le dépassement de la durée d'ouverture limite supérieure (GO1, GO2) ou est réduite de manière correspondante par le passage en dessous de la durée d'ouverture limite inférieure (GU1, GU2).

11. Procédé selon au moins l'une des revendications précédentes, **caractérisé par** au moins l'une des étapes suivantes :
- établissement d'une vitesse de déplacement admissible, de préférence d'une plage de vitesses de déplacement admissibles, pour l'appareil pulvérisateur (100) pendant l'épandage, à l'aide de l'au moins une durée d'ouverture limite (GU1-GO2), de préférence supérieure et/ou inférieure, des buses de pulvérisation (D1-D40), notamment sélectionnées, et/ou des débits d'épandage (QV) respectifs ; et/ou
- visualisation et/ou alerte de l'opérateur en cas de dépassement ou de passage en dessous d'une vitesse de déplacement admissible, de préférence d'une plage de vitesses de déplacement ; et/ou
- adaptation d'une vitesse de déplacement admissible, de préférence d'une plage de vitesses de déplacement admissibles, en modifiant de l'au moins une durée d'ouverture limite supérieure et/ou inférieure (GU1-GO2), notamment la fréquence d'impulsion.

12. Appareil pulvérisateur (100) agricole comportant au moins un système de commande et/ou de régulation (200) associé, notamment pour la commande et/ou la régulation de l'appareil pulvérisateur (100), **caractérisé en ce que** l'appareil pulvérisateur (100) agricole, notamment par le biais du système de commande et/ou de régulation (200), est destiné à mettre en œuvre le procédé selon au moins l'une des revendications précédentes.
